# EUROPEAN PATENT APPLICATION

(11) **EP 0 853 178 A1**
(43) Date of publication of application: **15.07.1998**
(21) Application number: 98100263.7
(22) Date of filing: 09.01.1998
(51) Int. Cl.: E05D 5/02, F16L 1/00

(54) **Fastening element for metal section bars**

(30) Priority: 09.01.1997 IT BO970006
(71) Applicant: ERRETI S.r.l., I-48010 Bagnara di Romagna (Ravenna) (IT)
(72) Inventor: Avvanzini, Ugo, 48010 Bagnara Di Romagna (Ravenna) (IT)
(74) Representative: Pederzini, Paolo

(57) **Abstract**

A fastening element (1) for metal casings of the type usable to fasten an accessory or component (2) to a metal section bar (3); the section bar (3) presents a seat (30) with longitudinal development, defined by a bottom wall (31), a pair of side walls (32, 33) opposing each other, and two parallel opposite mouldings or cornices (34, 35); a first side wall (32) extends for a value greater than that of the other side wall (33), i.e. the seat (30) is essentially trapezoid shaped; screw means (4) or the like are provided for the association and the mutual approach between the fastening element (1) and the accessory (2); the fastening element (1) presents a base portion (11) destined to oppose the accessory (2) and a latching portion (12), opposite to the base (11) and able to fasten the section bar (3); the latching portion (12), in its free end, has a curved shape, and is oriented towards a first side to define a tooth with longitudinal development (13), and, on a second side opposite the first, presents a pair of grooves (14, 15), so as to allow, with the fastening element (1) loosely associated to the accessory (2), an introduction of the tooth (13) into the seat (30), thanks to the play allowed by the grooves (14, 15) with respect to the projections presented by the section bar (3).

## Description

The present invention relates to a fastening element for metal casings usable to secure to metal section bars of casings those accessories or components such as, for instance, the hinges which define the articulated connection between fixed frame and movable frame.

The association of components to the structure of the fixed frame and of the movable frame of metal casings represents one of the factors which contribute considerably to increase the installation costs of such type of casing, both in terms of the time required and of the attention to be paid to such operations.

The present invention aims at solving the problem related to associating components onto metal section bars of particular conformation.

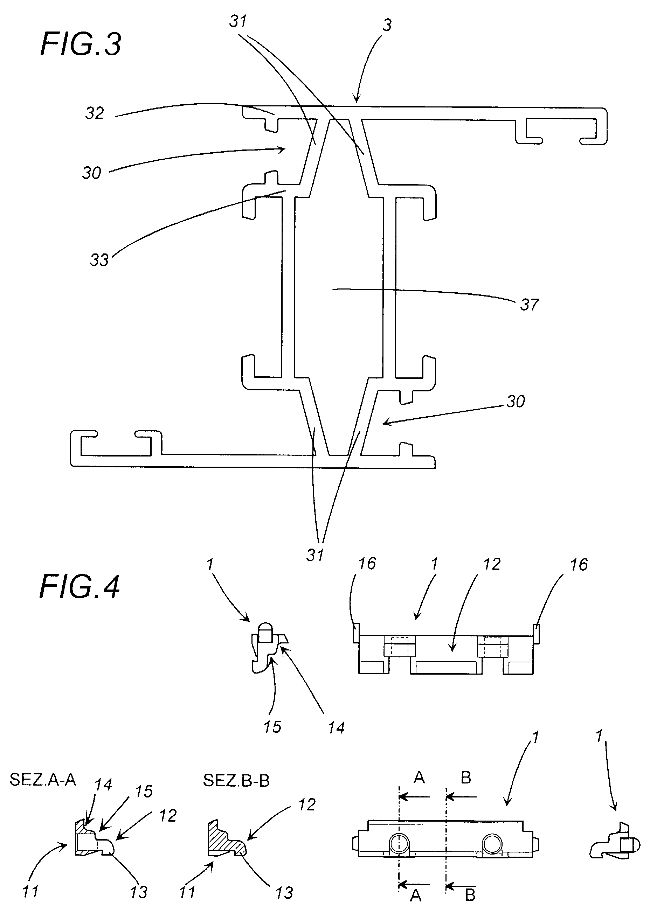

A possible non limiting example of utilisation of the subject fastening element can be constituted by the section bar shown in Figure 3, where it is shown in a transverse section to the direction of development.

The section bar, indicated with the number 3 in the figure, presents, for its own structural characteristics, an inner chamber 37 delimited, at the ends, by inclined shoulders 31. This particular conformation determines a consequent differentiation at least of the parts closely connected (i.e. partially coinciding) with the inner chamber. Among them, also the throats generally used to fasten components to the window or door.

In traditional profiles such throats are constituted by pairs of parallel mouldings or cornices, presented by the metal section bars, and provided with mutually projecting fins; such mouldings or cornices constitute in practice a sort of groove with an essentially "C" shaped cross section, whose smaller sides are represented by "L" shaped portions symmetrically opposed and the greater side perpendicular to the smaller sides so as to define a cavity with rectangular cross section. In practice, the throat is generally constituted by a "C" shaped grooved with rectangular cross section.

The solution conventionally used in most recent times provides for the use of a fastening element or tab insertable into the aforesaid throat and able to be associated by means of screws to an accessory, for example a hinge. The progressive mutual approach oftab and hinge due to screwing makes the tab slide along appropriate guide surfaces presented by the hinge, so as to cause respectively a longitudinal portion of the tab and a base portion of the hinge to be inserted into the two "L" shaped portions of the throat.

In the example as per Figure 3, due to the particular structure of the inner chamber 37, the throat 30 presented by the section bar 3 comprises a groove shaped according to a sort of oblique letter "C", wherein the bottom wall (in practice corresponding to the longer side of the "C" in the drawing) coincides with one of the aforesaid inclined shoulders 31 and is not perpendicular with respect to the side walls, determining a groove which, in its cross section, defines a sort of trapezoid.

The essentially trapezoidal conformation of the groove prevents prior art fastening elements (or tabs) from being inserted correctly and from adequately securing the components.

The invention, as it is charactensed by the claims, solves the problem of providing a fastening element for metal casings wherein housing in an essentially trapezoidal groove is provided for, i.e. wherein the distance between the bottom wall and one of the fins that delimit the groove has a relatively modest value.

The fastening element can be pre-mounted on the accessory or hinge, in order to allow for considerable time savings when mounting the window or door.

The technical characteristics of the invention, according to the aforesaid purposes, can be clearly seen from the content of the claims reported below and its advantages shall be made more evident in the detailed description that follows, made with reference to the accompanying drawings, which show an embodiment provided purely by way of non limiting example, in which:
- Figure 1 shows, in a plan top view with parts removed to highlight others, a portion of section bar whereto is associated a semi-hinge by means ofa fastening element realised according to the present invention;
- Figure 2 shows, in a plan top view with parts removed to highlight others, a portion of section bar made to interact, in two different positions, with a fastening element realised according to the present invention;
- Figure 3 shows, in a cross section view, a possible example of section bar whereon the present invention is usable;
- Figure 4 shows the four orthogonal views and two cross section views of an embodiment of the present invention.

In accordance with the accompanying figures, and as previously stated, the fastening element 1 for metal casings is of the type usable to secure an accessory or component 2 to a metal section bar of the casing itself. In particular, the section bar 3 presents a profile wherein the throat 30 destined to house the tab or fastening element 1 presents, in cross section, a conformation essentially as an oblique "C", meaning by that term a trapezoidal section wherein the bottom wall 31 of the throat 30 is not perpendicular to the side walls.

In other words, the seat 30 with longitudinal development is defined by a bottom wall 31, a pair of side walls 32 and 33 opposing each other and two parallel opposed mouldings or cornices 34 and 35.

A first side wall 32 of the pair of side walls 32 and 33 therefore extends for a value greater than that of the other side wall 33.

For the association and mutual approach between the fastening element 1 and the accessory 2, screw means 4 or the like are provided.

The fastening element 1 presents a base portion 11 destined to oppose the accessory 2 and a latching portion 12, opposite to the base portion 11 and suitable for fastening to section bar 3.

The latching portion 12, in its free end, has a curved shape, and is oriented towards a first side in order to define a tooth with longitudinal development 13 (meaning as longitudinal the development of the element 1 itself).

On the opposite side, the latching portion 12 presents a pair of grooves 14 and 15; in this way it is possible, once the fastening element 1 is associated loosely to the accessory 2, to introduce the tooth 13 into the seat 30, thanks to the play allowed by the grooves 14 and 15 with respect to the projections presented by the section bar 3.

The association between accessory 2 and element 1 can be executed before the mounting phase, in order to offer a tab-hinge set already composed.

In particular, the section bar 3 presents, externally to a first one (34) of the mouldings or cornices, an angular portion 36.

A first one (15) of the grooves 14 and 15 extends for a value substantially corresponding to the height ofthe first moulding or cornice 34 and the distance between the two grooves 14 and 15 is substantially equal to the value of the distance between the first moulding or cornice 34 and the angular portion 36: in this way it is possible for the fastening element 1, once associated to the section bar 3, to be able to copy the profile portion defined by the first cornice or moulding 34 and by the angle portion 36.

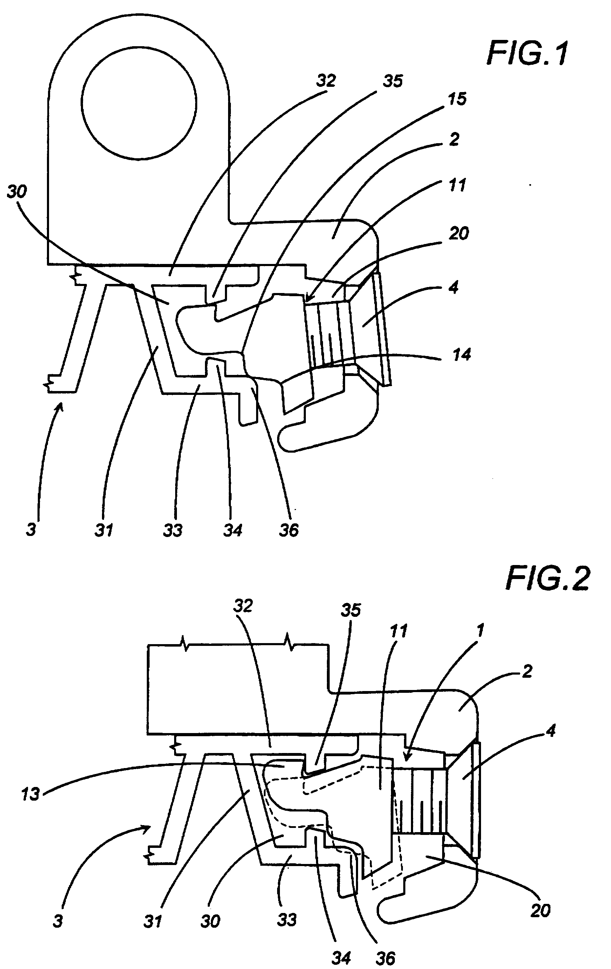

Figure 2 shows, with a dashed line, a possible positioning of the element 1 during mounting to a section bar 3; in this position, the element 1 is associated to the accessory 2, but presents a certain freedom which allows the introduction of the tooth 13 inside the throat 30, so as to define, after screw means 4 have been screwed, an attachment with the moulding 35. Screwing the means 4 causes the accessory 2 to move closer to section bar 3 (which position is not shown in the Figure), with an insertion of the element 1, in particular of the base portion 11, inside the cavity 20 presented by the accessory 2 itself.

Moreover, the fastening element 1 is provided, at its ends, with a pair of projecting appendices or wings 16, defining, with the longitudinal development of the fastening element 1 essentially right angles; in this way a means for manually gripping the fastening element 1 is defined, along with a means for obtaining a squared positioning of the element itself.

The invention thus conceived can be subject to numerous modifications and variations, without thereby departing from the scope of the inventive concept. Moreover, all components may be replaced with technically equivalent elements.

## Claims

1. Fastening element (1) for metal casings of the type usable to secure an accessory or component (2) to a metal section bar (3) of the casing itself; said section bar (3) presenting at least a seat (30) with longitudinal development defined by a bottom wall (31), by a pair of side walls (32, 33) opposing each other, and by two parallel and opposite mouldings or cornices (34, 35); a first side wall (32) of said pair of side walls (32, 33) extending for a value greater than that of the other side wall (33), i.e. said seat (30) having essentially trapezoidal shape; screw means (4) or the like being provided for the association and the mutual approach between said fastening element (1) and said accessory (2); said fastening element (1) presenting a base portion (11) destined to lie opposite to said accessory (2) and a latching portion (12), opposing said base (11) and suitable for attaching to said section bar (3); fastening element (1) characterised in that said latching portion (12), in its -free end, has a curved shape, oriented towards a first side to define a tooth with longitudinal development (13), and, on a second side opposite to the first, presents a pair of grooves (14, 15), in such a way as to allow, with said fastening element (1) associated loosely to said accessory (2), an introduction of said tooth (13) into said seat (30), thanks to the play allowed by said grooves (14, 15) with respect to the projections presented by said section bar (3).

2. Fastening element according to claim 1, wherein said section bar (3) presents, externally to a first one (34) of said mouldings or cornices, an angular portion (36), characterised in that a first one (15) of said grooves (14, 15) extends for a value substantially corresponding to the height of said first moulding or cornice (34) and in that the distance between said grooves (14, 15) is substantially equal to the value of the distance between said first moulding or cornice (34) and said angular portion (36), so as to allow said fastening element (1), once associated to the section bar (3), to copy the portion of profile defined by said first cornice or moulding (34) and by said angular portion (36).

3. Fastening element according to claim 1, characterised in that it is provided, at its ends, with a pair of appendices or wings (16), defining, with the longitudinal development of the fastening element (1) essentially right angles, in such a way as to define a means for manually gripping the fastening element (1) along with a means for obtaining the squared positioning of the element itself.
